# EUROPEAN PATENT SPECIFICATION

(11) **EP 1 267 602 B1**
(45) Date of publication and mention of the grant of the patent: **31.08.2005**
(21) Application number: 01915946.6
(22) Date of filing: 14.03.2001
(51) Int. Cl.: A01C 23/04, A01M 7/00, B05B 7/32

(54) **A DOSING-DEVICE IN AN IMPLEMENT FOR LIQUID FERTILIZERS**
DOSIERVORRICHTUNG FUR FLUSSIGE DUNGEMITTEL IN EINEM LANDWIRTSCHAFLICHEN GERAT
DISPOSITIF DE DOSAGE DANS UN OUTIL POUR ENGRAIS LIQUIDES

(30) Priority: 17.03.2000 NO 20001396
(43) Date of publication of application: 02.01.2003
(73) Proprietor: Hognestad, Reidar, 4370 Bryne (NO)
(72) Inventor: Hognestad, Reidar, 4370 Bryne (NO)
(74) Representative: Groner, Manfred
(86) International application number: PCT/NO2001/000109
(87) International publication number: WO 2001/070008

(56) References cited:
- EP-A1- 0 527 027
- WO-A1-99/30133
- DE-A1- 3 938 673
- DE-A1- 4 413 739
- DE-A1- 19 907 351
- SE-B- 470 513

## Description

The invention relates to a device in an implement for dosing liquid fertilizers or other utility liquids, such as liquid pesticides for agricultural purposes, in the following often referred to as a fertilizing implement. Fertilizing with liquid fertilizers is clearly different from the conventional spreading of granular solid inorganic fertilizers in the form of surface fertilizing by means of inorganic fertilizer spreaders carried and operated by tractors, in that liquid fertilizers, no matter what ejection level, also above soil surface level, will quite rapidly penetrate into the soil and be placed at the disposal of the plant roots and/or the germinating seeds. Liquid fertilizers can also be supplied to plants and seeds by dosed supply below the soil surface, at a desired depth or at several varying depths.

Such a device is known from the document EP 0 527 027.

Liquid fertilizers and other utility liquids, such as pesticides, may with advantage be applied in a more specific area near a plant or in the soil near a seed, root or bulb or tuber instead of being spread evenly across a surface area which has been planted or sown. In the following the term liquid fertilizer or just fertilizer also comprises other utility liquids for agricultural purposes.

In order to obtain the best possible effect and a good economy, it is important to use the correct amount of fertilizer. Correct positioning of the fertilizer varies according to the type of plant. In some cases it may be advantageous to use several types of fertilizers which are deposited differently relative to the plant. For example, for potatoes it may be of advantage to apply a complete chemical fertilizer at the root system of the potato plant, i.e. relatively deep, and a magnesium fertilizer on the surface or in a relatively shallow layer of the soil.

Fertilizing is conventionally carried out by the use of a tractor which is driven along the rows of plants or seed drills, carrying and driving a fertilizing implement, which is arranged to fertilize one or more parallel drills.

In order to achieve efficient fertilizing it is of advantage to dose fertilizers into portions. Dosing can be achieved in several ways, and the amount deposited per time unit is in proportion to the travelling speed of the tractor. A drawback of this solution is that the fertilizing is done continuously, i.e. not in portions, and thereby there is often unnecessary fertilizing between plants even if it is enough to fertilize only immediately adjacent to each plant.

The present invention is based on dosed fertilizing by means of a hydraulic piston and cylinder, by each working stroke apportioning a dose of fertilizer into a pipe which may have been introduced into the soil or may have its mouth above the soil surface.

It should be noted that liquid fertilizers can be corrosive. When a hydraulic piston and cylinder is used as an ejector for liquid fertilizer, there will be hydraulic oil from the hydraulic system of the tractor on one side of the cylinder piston and liquid fertilizer on the other. Leakage across the piston is almost unavoidable after some time in use, and there is the risk of fertilizing with fertilizer mixed with oil, while at the same time there is the risk that corrosive fertilizer will enter the hydraulic system of the tractor.

Therefore, the object of the invention has been to provide a device for a fertilizing implement for liquid fertilizers, wherein said drawbacks are avoided.

The object is realized through the features specified in the following description and the subsequent claims.

It is a feature of the invention that liquid fertilizer is dosed and apportioned by means of a double-acting hydraulic piston and cylinder, in which the chamber on one side of the piston forms a normal hydraulic cylinder chamber, whereas the other chamber alternately serves as an ejecting chamber and hydraulic cylinder chamber. Thereby is achieved, as an extra advantage, that the displaceable piston of the cylinder does not require a piston rod arranged thereto. Thereby is firstly achieved that the whole piston area is in service hydraulically, on both sides of the piston. Moreover a piston rod seal is unnecessary. Further it is a feature of the invention that the double-acting cylinder is operated in both directions by pressurized liquid fertilizer which is supplied from a tank by means of a pump which is preferably driven by the tractor.

In fertilizing the first cylinder chamber of the double-acting hydraulic cylinder is pressurized continuously by fertilizer at a first pressure. A second cylinder chamber is initially loaded with fertilizer liquid at a second pressure, which is higher than the first pressure, the piston thereby being displaced while the fertilizer liquid in the first chamber is being displaced to a reservoir, while at the same time the pressure in the first cylinder chamber is maintained.

The supply of liquid fertilizer under pressure to the first cylinder chamber is then shut off, and a pipe connection between the second cylinder chamber and the fertilizing point is opened. This results in a drop in the pressure in the second cylinder chamber to a lower value than that of the pressure in the first cylinder chamber, so that the piston is driven back by the pressure in the first cylinder chamber, while, at the same time, fertilizer is forced out of the second cylinder chamber through said pipe connection. Then the pipe connection is closed and the supply of liquid fertilizer to the second cylinder chamber is reopened, and the process is repeated.

In a fertilizing implement there will normally be several double-acting piston and cylinders which work as described. If fertilizing is carried out with two different types of fertilizers, each cylinder may be coupled for the relevant fertilizer type. However, it is believed to be of advantage to connect the first cylinder chamber of all the cylinders to the same fertilizer type and only distinguish between types of fertilizers for the second cylinder chamber of the cylinder, as this will simplify the arrangement of hydraulic lines.

The dosing can be determined by means of adjustable mechanical stops, which are arranged to limit the stroke length of the piston. A sensor or limit switch may possibly be used, which outputs a signal when the volume of the second cylinder chamber has reached a desired dose volume. A control device, which is arranged to respond to said signal, may then output a signal to valves which shut off the supply of fertilizer and open the pipe connection as mentioned.

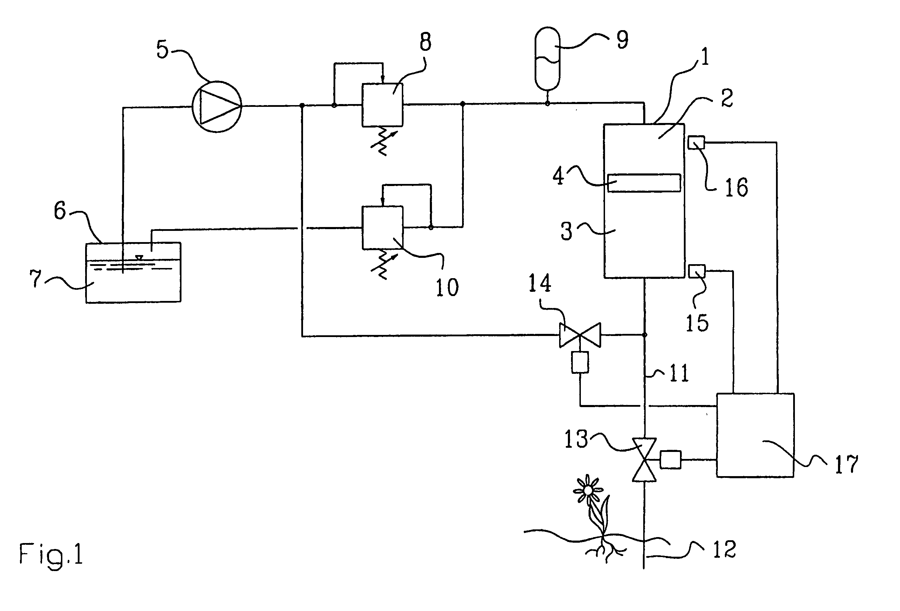

The invention is described in further detail in the following by means of an exemplary embodiment, and reference is made to the appended drawing, in which the single figure shows a hydraulic circuit diagram for a fertilizing implement for the dosed ejection of a liquid fertilizer.

The reference numeral 1 identifies a hydraulic piston and cylinder, which is divided internally into a first cylinder chamber 2 and a second cylinder chamber 3 by means of a freely displaceable piston 4 (without a piston rod). The cylinder 1 is incorporated in a fertilizing implement, not shown, mounted on a tractor, and may form one of several corresponding piston and cylinders.

A pump 5 is connected on its suction side to a tank 6 with a reservoir of liquid fertilizer 7. The pump may be driven by the power take-off of the tractor, a hydraulic motor connected to the hydraulic system of the tractor, or in another suitable manner. The pump is arranged so that it can work against a closed outlet without being damaged.

At its pressure side the pump is connected to the inlet of a pressure relief valve 8 whose outlet is connected to the first cylinder chamber 2 of the piston and cylinder 1 and to a pressure accumulator 9.

The pressure relief valve 8 is arranged to open whenever the pressure on the inlet exceeds a set (adjustable) value.

The pressure accumulator 9 serves to equalize pressure surges in the first cylinder chamber 3.

The first cylinder chamber 2 of the piston and cylinder 1 further has a further adjustable pressure relief valve 10 arranged thereto and arranged to open at a pressure which is lower than the opening pressure of the pressure relief valve 8, in order thereby to allow fertilizer to return to the tank 6.

The circulation of fertilizer liquid (the "hydraulic" circulation) illustrated in the form of a circuit diagram in the figure of the drawing, thus comprises two pressure relief valves 8, 10 connected in series, and the pressure between them determines the pressure of the cylinder chamber 2.

When the piston 4 is displaced upwards, the pressure accumulator 9 will receive some liquid from the first cylinder chamber 2, whereas some flows to the tank 6 through the pressure relief valve 10.

The second cylinder chamber 3 (below the piston 4) of the piston and cylinder 1 is connected to an outlet pipe 11 which is arranged to carry liquid fertilizer from the second cylinder chamber 3 to a fertilizing area 12. In the outlet pipe 11 is arranged an outlet valve 13 which is arranged to respond to a control signal and open and shut off a fertilizer liquid flow in the outlet pipe 11.

Further, the pressure side of the pump 5 is connected through a supply valve 14 to the outlet pipe 11 between the second cylinder chamber 3 and the outlet valve 13. The supply valve 14 is arranged to respond to a control signal and open and shut off a fertilizer liquid flow from the pump 5 to the outlet pipe 11.

In the junction between the pipe 11 and the pipe connected to the pressure side of the pump 5, a three-way valve may be inserted instead of the valves 13, 14. The three-way valve is arranged so that it opens between the pump and the second cylinder chamber 3 or between the second cylinder chamber 3 and the outlet pipe 11.

A first limit switch 15 is arranged to respond and output a signal when the piston 4 is at a first end position, by which the volume of the first cylinder chamber 2 is at or near a maximum value, i.e. when the piston 4 is at the bottom of the cylinder 1.

A second limit switch 16 is arranged to respond and output a signal when the piston 4 is in a second end position, in which the volume of the second cylinder chamber 3 corresponds to the desired dose volume of fertilizer. The second limit switch 16 may with advantage be displaceable longitudinally of the cylinder to set the fertilizer dose volume at the desired value.

The limit switches 15, 16 are connected to separate entrances on a control unit 17, which is arranged to respond to signals from the limit switches 15, 16 and possibly also to signals from other, not shown, limit switches or other signal sources. Outlets on the control unit 17 are connected to the outlet valve 13 and the inlet valve 14, so that the outlet valve 13 and the inlet valve 14 can open and close on signals from the control unit 17.

The control unit 17 is arranged to close the outlet valve 13 and open the inlet valve 14 whenever the first limit switch 15 outputs a signal, and keep the outlet valve 13 closed and the inlet valve 14 open until the second limit switch 16 outputs a signal, and then close the inlet valve 14.

The control unit 17 may be arranged to open the outlet valve 13 when the second limit switch 16 outputs a signal, or time-delayed after the second limit switch 16 outputs a signal. The control unit 17 may alternatively be arranged to open the outlet valve 13 on a combination of a signal from the second limit switch 16 and a signal from another signal source, not shown, such as a signal from a sensor which is activated each time the outlet pipe 11 has been moved to a new fertilizing area 12.

An initial loading is done out of cycle. Then there is the following cycle: A) Waiting for a start signal; B) starting injection; C) loading and D) proceeding to 1.

The first cylinder chamber 2 is pressurized with liquid fertilizer at a first pressure which is lower than the pump pressure, for example half the pump pressure. The outlet valve 13 is closed and the inlet valve 14 is open. The pressure within the second cylinder chamber 3 corresponds to the pump pressure or the atmospheric pressure.

In loading, i.e. when the valve 13 is closed and the valve 14 is open, the pressure in the second cylinder chamber 3 is higher than the pressure in the first cylinder chamber 2, and the piston 4 is displaced in the direction towards the first cylinder chamber 2, as shown in the figure. Fertilizer in the first cylinder chamber 2 is received in the pressure accumulator 9, while at the same time the pressure in the first cylinder chamber 2 is rising slightly, and some fertilizer is possibly flowing to the tank 6 through the pressure relief valve 10.

The pressure relief valves 8, 10 are sized to let through the total amount of fertilizer liquid from the pump 5 (to avoid undesired pressure increase) at any time, in case of a stoppage or very low travelling speed.

When the piston 4 reaches a position, in which the second limit switch 16 responds and outputs a signal to the control unit 17, the control unit 17 closes the inlet valve 14. Depending on how the control unit 17 is arranged, it will output a signal to the outlet valve 13 to open, either immediately, after a time delay or when the control unit 17 receives a signal from another signal source, not shown, for example a signal that the end of the outlet pipe 11 has reached the relevant fertilizing area 12.

When the outlet valve 13 opens, fertilizer flows out of the second cylinder chamber 3 through the outlet pipe 11 through the outlet valve 13 to the fertilizing area 12. The pressure in the second cylinder chamber 3 first drops quickly to a value lower than that of the pressure in the first cylinder chamber 2. The piston 4 is displaced towards its first end position, while the pressure within the second cylinder chamber 3 is generally maintained at a value which is slightly lower than the pressure of the first cylinder chamber 2. The first cylinder chamber 2 is replenished with liquid fertilizer from the pressure accumulator 9 and from the tank 6 through the pump 5 and through the pressure relief valve 8. When the piston 4 reaches its first end position (at the bottom), the first limit switch 15 responds and outputs a signal to the control unit 17, which thereby closes the outlet valve 13 and opens the inlet valve 14. The cylinder chamber 3 is thereby loaded and is ready for another cycle.

When several types of fertilizers are used, the first cylinder chamber 2 of each piston and cylinder 1 may be connected to the outlet of the same pressure relief valve 8, as shown in the figure. For each cylinder 1 the second cylinder chamber 3 is connected through the outlet pipe 11 to the associated outlet valve 13 and inlet valve 14, as shown in the figure. Each inlet valve 14 is connected to the outlet of a pump for the relevant type of fertilizer. The inlet valves 14 of some cylinders 1 will then be connected as shown in the figure and carry the same type of fertilizer as that which provides pressure in the first cylinder chamber 2 of the cylinder 1 concerned. Inlet valves 14 of other cylinders 1 are connected to the pressure side of a pump which is not shown, and which is arranged to pump another type of liquid fertilizer, possibly a liquid pesticide. When different "types" of fertilizers are involved, this term also refers to the same type of inorganic fertilizer which, with the admixture of different amounts of water to the same amount of inorganic fertilizer, provides different concentrations.

## Claims

1. A device in an agricultural implement for dosed ejection of liquid fertilizer or other utility liquid for agricultural purposes, such as a pesticide, comprising at least one, preferably tubular, fertilizer liquid supply means (11) which has its mouth above or below the soil surface, and which can be moved by means of an implement-carrying motor vehicle, such as a tractor, from one fertilizing area (12) to another,
**characterized in that** the implement comprises at least one double-acting hydraulic piston and cylinder (1) which may be arranged to eject, by each working stroke, a dosed portion of fertilizer liquid, and which comprises a freely displaceable piston (4), which, apart from in its two extreme end positions, divides the internal cylinder space into a first cylinder chamber (2) and a second cylinder chamber (3), the latter being in fluid communication with said fertilizer liquid supply means (11), which may be formed and sized to receive, by each working stroke of the piston (4), said dosed portion of fertilizer liquid, corresponding to the internal volume of the second cylinder chamber (3), and which in addition to said fluid communication with the second chamber (3) of the piston and cylinder, has a pipeline connection that leads to a pump-operated (5) fertilizer liquid tank (6, 7) and is equipped with valves (8, 10, 13, 14), the first chamber (2) of the cylinder space being connected at its free end to said valved pipeline connection, so that in the chambers (2, 3) on either side of the piston (4), i.e. in the first cylinder chamber (2) and in the second cylinder chamber (3), there will at any time be only fertilizer liquid (7), whereby said second chamber (3) alternately serves as an ejecting chamber and a hydraulic cylinder chamber, whereas the first cylinder chamber (2) serves as a hydraulic cylinder chamber by piston displacement in both directions.

2. A device according to claim 1, **characterized in that** the fertilizer liquid supply means (11) is formed by a preferably vertical or essentially vertically oriented supply pipe (11), which has an inlet shut-off valve (14) and an outlet shut-off valve (13) arranged thereto, the inlet shut-off valve (14) of the supply pipe (11) being mounted into a fertilizer liquid pipeline which leads to the pressure side of the pump (5), whereas the outlet shut-off valve (13) is mounted into the supply pipe (11) itself, between the connection point of the inlet shut-off valve pipeline on the supply pipe (11) and the discharge end thereof, the first cylinder chamber (2) also being connected to the pressure side of the pump (5) through a pipeline with at least one valve device (8-10) and with possible return (10) to the tank (6, 7).

3. A device according to claim 2, **characterized in that** - when the first cylinder chamber (2) has been pressurized by means of fertilizer liquid at a first pressure - the inlet valve (14) and outlet valve (13) of the supply pipe (11) are arranged to adopt an open position and a closed position, respectively, so that by the pump (5) pressurized fertilizer liquid from the tank (6, 7) is supplied to the second cylinder chamber (3) through the supply pipe (11), whereby the second cylinder/ejecting chamber (3) is pressurized to a second pressure which is higher than said first pressure, and the piston (4) moves to the extreme end position, which corresponds to the maximum volume of the second chamber (3), whereby the piston (4) and thereby the double-acting hydraulic piston and cylinder (1) adopts a position ready to eject a dosed portion of fertilizer liquid at a fertilizing area (12), corresponding to said volume of the second cylinder/ejecting chamber (3), the outlet shut-off valve (13) subsequently being arranged to open and establish fluid communication between the second chamber (3) and the supply pipe (11), whereas the inlet shut-off valve (14) closes, so that the pressure within the second chamber (3) drops, and the pressure in the first chamber (2) is able to move the piston (4) in order to empty the second chamber (3) during ejection of its maximum contents of liquid fertilizer (7).

4. Ad device according to one or more of the preceding claims, **characterized in that** the piston and cylinder (1) has at least one sensor/limit switch (16; 16,15) arranged thereto, which is arranged to output a signal, depending on the position of displacement of the piston (4), when the volume of the second cylinder chamber (3) has reached the desired dose volume, there being arranged a control unit (17), which is arranged to respond to said signal, thereby outputting signals to the shut-off valves (14, 13) of the supply pipe (11) at the inlet and outlet thereof.

5. A device according to one or more of the preceding claims, **characterized in that** the pressure relief valve (8) in the pipeline leading to the first cylinder chamber (2) is connected to the pump (5) as the relief (8) is followed by a pressure accumulator (9), there being connected to the pipeline between this valve (8) and this accumulator (9) a return pipeline which is provided with a further pressure relief valve (10) and leads back to the tank (6, 7).

6. A device according to any one of the preceding claims, **characterized in that** the fertilizing implement comprises several double-acting hydraulic piston and cylinders (1) of the specified kind, which work in accordance with the above specifications, wherein each of said cylinders may be meant for handling one particular type of liquid fertilizer, the first cylinder chambers (2) of all these piston and cylinders preferably being in fluid communication with a tank containing one and the same type of fertilizer, so that there is only distinguished between the types of fertilizers of the second chambers (3) of the piston and cylinders (1).

## Patentansprüche

1. Vorrichtung in einem landwirtschaftlichen Gerät für die dosierte Abgabe von flüssigen Düngemitteln oder einer anderen Gebrauchsflüssigket für landwirtschaftliche Zwecke, wie beispielsweise Pestizide, mit wenigstens einem vorzugsweise rohrförmigen Düngeflüssigkeitsabgabemittel (11), welches eine Mündung über oder unter der Erde besitzt und das mit einem gerätetragenden Motorfahrzeug, wie beispielsweise einem Traktor von einem Düngebereich (12) zu einem anderen Düngebereich bewegt werden kann, **dadurch gekennzeichnet, dass** das Gerät wenigstens einen doppelt wirkenden hydraulischen Kolben und Zylinder (1) aufweist, der angeordnet sein kann, um bei jedem Arbeitstakt eine dosierte Portion eines Düngemittels abzugeben und der einen frei verschieblichen Kolben (4) aufweist, der mit Ausnahme der beiden äussersten Endpositionen den Innenraum des Zylinders in eine erste Zylinderkammer (2) und eine zweite Zylinderkammer (3) unterteilt, wobei die letztere in Flüssigkeitsverbindung ist mit dem genannten Düngeflüssigkeitsabgabemittel (11), das ausgebildet und so dimensioniert sein kann, um bei jedem Arbeitstakt des Kolbens (4) die genannte dosierte Portion der Düngeflüssigkeit zu erhalten, wobei diese korrespondiert zum inneren Volumen der zweiten Zylinderkammer (3) und die zusätzlich zur genannten Flüssigkeitsverbindung mit der zweiten Zylinderkammer (3) des Kolbens und Zylinders eine Leitungsverbindung aufweist, welche zu einem pumpenbetätigten (5) Düngerflüssigkeitstank (6, 7) führt und welcher Ventile (8, 10, 13, 14) aufweist, wobei die erste Kammer (2) des Zylinderraumes an seinem freien Ende mit der genannten mit Ventilen versehenen Leitung verbunden ist, so dass in den Kammern (2, 3) auf beiden Seiten des Kolbens (4) bzw. in der ersten Zylinderkammer (2) und in der zweiten Zylinderkammer (3) sich jederzeit nur Düngeflüssigkeit (7) befindet, wobei die genannte zweite Kammer (3) alternativ als Abgabekammer und als hydraulische Zylinderkammer dient, wobei die erste Zylinderkammer (2) als hydraulische Zylinderkammer zum Verschieben des Kolbens in beiden Richtungen dient.

2. Vorrichtung nach Anspruch 1, **dadurch gekennzeichnet, dass** das Düngeflüssigkeitsabgabemittel (11) gebildet ist durch ein vorzugsweise vertikale oder im Wesentlichen vertikal ausgerichtetes Abgaberohr (11), das ein Einlassabsperrventil (14) und ein Ausgangsabsperrventil (13) aufweist, wobei das Einlassabsperrventil (14) des Abgaberohres (11) in einer Düngeflüssigkeitsleitung montiert ist, welche zur Druckseite der Pumpe (5) führt, wobei das Ausgangsabsperrventil (13) selbst im Abgaberohr (4) eingebaut ist und zwar zwischen der Verbindungsstelle der Einlassabsperrventilleitung des Abgaberohres (11) und dem Auslassende davon, wobei die erste Zylinderkammer (2) ebenfalls verbunden ist zur Druckseite der Pumpe (5) über eine Leitung mit wenigstens einer Ventilvorrichtung (8-10) und mit einer möglichen Rückführung (10) zum Tank (6, 7).

3. Vorrichtung nach Anspruch 2, **dadurch gekennzeichnet, dass** dann, wenn die erste Zylinderkammer (2) mittels Düngeflüssigkeit auf einen ersten Druck gebracht wurde, das Einassventil (14) und das Auslassventil (13) des Abgaberohres (11) so ausgebildet sind, dass sie eine offene Stellung und eine geschlossene Stellung annehmen können, so dass bei der Pumpe (5) unter Druck stehende Düngeflüssigkeit vom Tank (6, 7) durch das Abgaberohr (11) der zweiten Zylinderkammer (3) zugeführt wird, wobei die zweite Zylinderkammer/Abgabe (3) auf einen zweiten Druck gebracht wird, der höher ist als der erste Druck und wobei der Kolben (4) zur äussersten Endposition gefahren wird, die dem maximalen Volumen der zweiten Kammer (3) korrespondiert, wobei der Kolben (4) und somit der doppelt wirkende hydraulische Kolben und Zylinder (1) eine Position erreicht, in welcher eine dosierte Portion der Düngeflüssigkeit an einen Düngebereich (12) abgebbar ist, welche Portion korrespondierend ist zum genannten Volumen der zweiten Zylinder/Abgabekammer (3), wobei das Ausgangsabsperrventil (13) nachfolgend geöffnet wird und eine Flüssigkeitsverbindung gebildet wird zwischen der zweiten Kammer (3) und dem Abgaberohr (11), wonach das Einlassabsperrventil (14) geschlossen wird, so dass der Druck innerhalb der zweiten Kammer (3) fällt und der Druck in der ersten Kammer (2) fähig ist, den Kolben (4) zu bewegen, um die zweite Kammer (3) während der Abgabe ihres maximalen Inhaltes an flüssigem Dünger (7) zu entleeren.

4. Vorrichtung nach einem der vorhergehenden Ansprüche, **dadurch gekennzeichnet, dass** der Kolben und Zylinder (1) wenigstens einen Sensor/Endschalter (16; 16, 15) aufweist, welcher abhängig von der Verschiebungsposition des Kolbens (4) ein Signal abgibt, wenn das Volumen der zweiten Zylinderkammer (3) das gewünschte Dosiervolumen erreicht, wobei eine Steuereinheit (17) vorgesehen ist, welche so ausgebildet ist, dass das genannte Signal beantwortet wird, wobei Signale zu den Absperrventilen (14, 13) des Abgaberohres (11) am Eingang und am Ausgang davon abgegeben werden.

5. Vorrichtung nach einem der vorhergehenden Ansprüche, **dadurch gekennzeichnet, dass** das Druckentspannungsventil (1) in der Leitung, welche zur ersten Zylinderkammer (2) führt, mit der Pumpe (5) verbunden ist, wobei auf die Druckentspannung (8) ein Druckakkumulator (9) folgt, wobei zur Leitung zwischen diesem Druckentspannungsventil (8) und diesem Druckakkumulator (9) eine Rückfuhrleitung verbunden ist, welche mit einem weiteren Druckentspannungsventil (10) versehen ist und welche zurück zum Tank (6, 7) führt.

6. Vorrichtung nach einem der vorhergehenden Ansprüche, **dadurch gekennzeichnet, dass** das Düngegerät mehrere doppelt wirkende hydraulische Kolben und Zylinder (1) der genannten Art aufweist, welche wie oben erläutert arbeiten, wobei vorgesehen ist, dass die genannten Zylinder zur Handhabung einer bestimmten Art einer Düngeflüssigkeit vorgesehen ist, wobei die ersten Zylinderkammern (2) all dieser Kolben und Zylindern vorzugsweise in Flüssigkeitsverbindung sind mit einem Tank, welcher ein und dieselbe Art des Düngers aufweist, so dass lediglich Unterschiede bestehen zwischen den Arten der Dünger der zweiten Kammer (3) der Kolben und Zylinder (1).

## Revendications

1. Dispositif dans un outil agricole pour l'éjection dosée d'engrais liquide ou d'autre liquide utilitaire pour usage agricole, tel qu'un pesticide, comprenant au moins un moyen d'alimentation en engrais liquide (11), de préférence tubulaire, dont l'embouchure se situe au-dessus ou en dessous de la surface du sol, et qui peut être déplacé au moyen d'un véhicule à moteur portant un outil, tel qu'un tracteur, d'une zone à fertiliser (12) à une autre,
**caractérisé en ce que** l'outil comprend au moins une unité cylindre-piston hydraulique double action (1) qui peut être prévue pour éjecter, à chaque course de travail, une portion dosée d'engrais liquide, et qui comprend un piston (4) librement déplaçable, qui, sauf dans ses deux positions terminales extrêmes, divise l'espace interne du cylindre en une première chambre de cylindre (2) et une deuxième chambre de cylindre (3), cette dernière étant en communication fluidique avec ledit moyen d'alimentation en engrais liquide (11), qui peut être formé et dimensionné pour recevoir, à chaque course de travail du piston (4), ladite portion dosée d'engrais liquide, correspondant au volume interne de la deuxième chambre de cylindre (3), et qui, en plus de ladite communication fluidique avec la deuxième chambre (3) de l'unité cylindre-piston, présente une connexion par tuyau qui conduit à un réservoir d'engrais liquide (6, 7) actionné par pompe (5) et est équipée de vannes (8, 10, 13, 14), la première chambre (2) de l'espace du cylindre étant connectée à son extrémité libre à ladite connexion par tuyau à vannes, de sorte que dans les chambres (2, 3), de part et d'autre du piston (4), c'est-à-dire dans la première chambre de cylindre (2) et dans la deuxième chambre de cylindre (3), il y ait à tout moment seulement de l'engrais liquide (7), ce par quoi ladite deuxième chambre (3) sert en alternance de chambre d'éjection et de chambre de cylindre hydraulique, tandis que la première chambre de cylindre (2) sert de chambre de cylindre hydraulique par déplacement du piston dans les deux sens.

2. Dispositif selon la revendication 1, **caractérisé en ce que** le moyen d'alimentation en engrais liquide (11) est formé par un tuyau d'alimentation (11) de préférence vertical ou orienté essentiellement verticalement, qui a une vanne d'arrêt d'entrée (14) et une vanne d'arrêt de sortie (13) arrangées sur celui-ci, la vanne d'arrêt d'entrée (14) du tuyau d'alimentation (11) étant montée dans un tuyau d'engrais liquide qui conduit au côté sous pression de la pompe (5), tandis que la vanne d'arrêt de sortie (13) est montée dans le tuyau d'alimentation (11) lui-même, entre le point de connexion du tuyau à vanne d'arrêt d'entrée sur le tuyau d'alimentation (11) et son extrémité de décharge, la première chambre de cylindre (2) étant également connectée au côté sous pression de la pompe (5) par un tuyau ayant au moins un dispositif à vannes (8-10) et avec un retour possible (10) vers le réservoir (6, 7).

3. Dispositif selon la revendication 2, **caractérisé en ce que** - lorsque la première chambre de cylindre (2) a été mise sous pression au moyen d'engrais liquide à une première pression - la vanne d'entrée (14) et la vanne de sortie (13) du tuyau d'alimentation (11) sont prévues pour adopter une position ouverte et une position fermée, respectivement, de sorte que de l'engrais liquide provenant du réservoir (6, 7) soit fourni par la pompe (5) à la deuxième chambre de cylindre (3) par le biais du tuyau d'alimentation (11), ce par quoi la deuxième chambre de cylindre / d'éjection (3) est pressurisée à une deuxième pression qui est supérieure à ladite première pression, et le piston (4) se déplace jusqu'à la position d'extrémité qui correspond au volume maximum de la deuxième chambre (3), ce par quoi le piston (4), et par conséquent l'unité cylindre-piston hydraulique à double action (1) adopte une position prête à éjecter une portion dosée d'engrais liquide dans une zone à fertiliser (12), correspondant audit volume de la deuxième chambre de cylindre / d'éjection (3), la vanne d'arrêt de sortie (13) étant subséquemment prévue pour s'ouvrir et établir la communication fluidique entre la deuxième chambre (3) et le tuyau d'alimentation (11), tandis que la vanne d'arrêt d'entrée (14) se ferme, de sorte que la pression à l'intérieur de la deuxième chambre (3) chute, et que la pression dans la première chambre (2) soit en mesure de déplacer le piston (4) afin de vider la deuxième chambre (3) au cours de l'éjection de son contenu maximum d'engrais liquide (7).

4. Dispositif selon l'une quelconque ou plusieurs des revendications précédentes, **caractérisé en ce que** l'unité cylindre-piston (1) a au moins un capteur / interrupteur-limiteur (16 ; 16, 15) arrangé sur celle-ci, lequel est prévu pour fournir un signal en fonction de la position de déplacement du piston (4), lorsque le volume de la deuxième chambre de cylindre (3) a atteint le volume de dose souhaité, une unité de commande (17) étant prévue, laquelle est prévue pour réagir audit signal en fournissant ainsi des signaux aux vannes d'arrêt (14, 13) du tuyau d'alimentation (11) au niveau de son entrée et de sa sortie.

5. Dispositif selon l'une quelconque ou plusieurs des revendications précédentes, **caractérisé en ce que** la vanne de décharge (8) dans le tuyau conduisant à la première chambre de cylindre (2) est connectée à la pompe (5) alors que la vanne de décharge (8) est suivie d'un accumulateur de pression (9), un tuyau de retour étant connecté au tuyau entre cette vanne (8) et cet accumulateur (9), lequel est pourvu d'une vanne de décharge supplémentaire (10) et conduit de nouveau au réservoir (6, 7).

6. Dispositif selon l'une quelconque des revendications précédentes,
**caractérisé en ce que** l'outil de fertilisation comprend plusieurs unités cylindre-piston hydrauliques à double action (1) du type spécifié, qui fonctionnent conformément aux spécifications ci-dessus, chacun desdits cylindres pouvant être destiné à traiter un type d'engrais liquide particulier, les premières chambres de cylindre (2) de toutes ces unités cylindre-piston étant de préférence en communication fluidique avec un réservoir contenant un type unique d'engrais, de sorte que l'on n'ait qu'à distinguer entre les types d'engrais des deuxièmes chambres (3) des unités cylindre-piston (1).
